# EUROPEAN PATENT APPLICATION

(11) **EP 1 329 823 A1**
(43) Date of publication of application: **23.07.2003**
(21) Application number: 01900650.1
(22) Date of filing: 11.01.2001
(51) Int. Cl.: G06F 17/60

(54) **BIDDING SYSTEM**

(30) Priority: 19.10.2000 JP 2000319822
(71) Applicant: CMNET Corporation, Tokyo 107-0052 (JP)
(72) Inventor: IMAI, Yasuyuki Softbank E-Commerce Corp., Chuo-ku, Tokyo 103-0015 (JP); TANIGUCHI, Kentaro Softbank E-Commerce Corp., Chuo-ku, Tokyo 103-0015 (JP); ITOH, Yasuyu Mori Building Co., Ltd., Minato-ku, Tokyo 107-6090 (JP); ISOI, Yoshimitsu Mori Building Co., Ltd., Minato-ku, Tokyo 107-6090 (JP); OZAWA, Yukio Mori Building Co., Ltd., Minato-ku, Tokyo 107-6090 (JP)
(74) Representative: Leson, Thomas Johannes Alois, Dipl.-Ing.
(86) International application number: JP0100073
(87) International publication number: WO02033608

(57) **Abstract**

A bidding system in accordance with the present invention receives bids from bidders by disclosing call-for-bid information that has been received from a bid caller calling for bids, and receives information about a winning bidder determined by the bid caller based on that bidding information. The bidding system includes a bidding processing portion 14 receiving bidding price range information sent by a bidder over a communication network, and a fee charge processing portion 13 for calculating a fee based on the bidding price range information received by the bidding processing portion 14. Furthermore, shared keys are used in order not to divulge information to the site operator.

## Description

### TECHNICAL FIELD

The present invention relates to a bidding system, and more particularly to a comprehension model for the winning bidding price.

### BACKGROUND ART

As information and communication technology progress aggressively and the internet becomes more popular, transactions are being carried out over the internet. As one form of this, there are electronic marketplace sites. At an electronic marketplace site, bidders submit bidding prices in reply to a party calling for bids (referred to as "bid caller" below), the winning bidder is eventually chosen, and the winning bidding price is settled. Electronic marketplace sites are mostly sustained by a fee taken from the bid caller or the bidders. Fees can be bidding fees or fees for a winning bid, for example. Bidding fees are usually determined based on the bidding price. Fees for winning bids are usually determined based on the amount of the winning bidding price. Therefore, the site operators of electronic marketplace sites need to know the bidding prices and winning bidding prices, in order to bill the bid caller and/or the bidding parties for the bidding fees and winning bidding fees.

However, since for bid callers, bidders and winning bidders, the information about the price of the winning bid is suggestive of the profit margin of the own business, it is desirable not to disclose it to third parties. It is a fact that they do not want competitors or even the site operator of the electronic marketplace site to know the bidding prices or winning bidding prices.

Especially regarding bids for construction contracts, the sums involved are much higher than for regular products, so that the adverse effects brought about when bidding prices or winning bidding prices are disclosed to third parties are much larger than for other products or services.

Thus there is the problem that in the related art, the bidding prices and the winning bidding prices are revealed to the site operator of the electronic marketplace site.

It is therefore an object of the present invention to provide a bidding system in which bidding can be performed without revealing the bidding prices or the winning bidding prices to the site operator of the electronic marketplace site.

### DISCLOSURE OF THE INVENTION

The bidding system of the present invention is a bidding system that receives bids from bidders by disclosing call-for-bid information that has been received from a bid caller calling for bids, and that receives information about a winning bidder determined by the bid caller based on that bidding information, which comprises the bidding information receiving means (for example, the bidding processing portion 14 of the best mode for carrying out the invention) for receiving bidding price range information sent by a bidder over a communication network and the fee calculating means for calculating a fee based on the bidding price range information received by the bidding information receiving means (for example, the fee charging processing portion 13 of the best mode for carrying out the invention). Consequently, bidding can be preformed without letting the bidding prices and the winning bidding price know to the site operator of an electronic commerce site.

Also, The bidding system of the present invention is a bidding system that receives bids from bidders by disclosing call-for-bid information that has been received from a bid caller calling for bids, and that receives information about a winning bidder determined by the bid caller based on that bidding information, which comprises the bidding information receiving means (for example, the bidding processing portion 14 of the best mode for carrying out the invention) for receiving bidding price information and bidding price range information sent by a bidder over a communication network, the bidding price information sending means (for example, the bidding processing portion 14 of the best mode for carrying out the invention) for sending bidding price information received by the bidding information receiving means over the communication network to the bid caller, bidding price information leakage prevention means (for example, the shared key of the best mode for carrying out the invention) for preventing the bidding price information received by the bidding information receiving means from letting the operator of the bidding system know, and the fee calculating means (for example, the fee charging processing portion 13 of the best mode for carrying out the invention) for calculating a fee based on the bidding price range information received by the bidding information receiving means.

It is preferable that the above bidding price range information is information made up of a predetermined price range including the bidding price.

Also, it is preferable that the above fee calculation means calculates the fee using a table correlating the bidding price range information with fee information.

Further, it is preferable that the fee calculation means calculates the winning bidding fee based on the winning bidder information and the bidding price range information.

Furthermore, it is preferable that the above bidding system further comprises, on a bidder' s terminal, means for comparing the bidding price information entered by the bidder with bidding range information, and prompting the bidder reenter a bidding price in case of an inconsistency. Consequently, the bidder can not input the bidding range information which is inconsistence with the bidding price.

Also, the bidding system may further comprise means for restricting participation in the bidding if a bidder does not agree to payment of the bidding fee. Consequently, it can be made sure that the bidding fee can be collected. Furthermore, it eliminates bidders who try to take part in the bidding "just for fun".

The bidding system may further comprise means for restricting participation in the bidding if a bidder does not enter a method for payment of the bidding fee. Consequently, it can be made sure that the bidding fee can be collected. Furthermore, it eliminates bidders who try to take part in the bidding "just for fun".

The bidding system may further comprise means for confirming a bidder' s ability to settle payment, based on amethod of payment of the bidding fee entered by the bidder, and means for restricting participation in the bidding if the bidder's ability to settle payment cannot be confirmed with that confirmation means. By doing so, it can be made sure that the bidding fee can be collected. Furthermore, it eliminates bidders who try to take part in the bidding "just for fun".

The bidding system of this invention is the bidding system that receives bids from bidders by disclosing call-for-bid information that has been received from a bid caller calling for bids, and that receives information about a winning bidder determined by the bid caller based on that bidding information, which comprises shared key receiving means (for example, a shared key fee processing portion 16 of the best mode for carrying out the invention) for receiving, over a communication network, a shared key different for each bidder that has been created by the bid caller and stored in an electronic envelope, shared key sending means (for example, a shared key fee processing portion 16 of the best mode for carrying out the invention) for sending, over the communication network, the received shared keys to the bidders, bidding price information receiving means (for example, a bidding processing portion 14 of the best mode for carrying out the invention) for receiving, over the communication network, bidding price information that has been encrypted with a shared key sent by the shared key sending means, and biddingprice information sending means (for example, a bidding processing portion 14 of the best mode for carrying out the invention) for sending, over the communication network, bidding price information that has been received by the bidding price information receiving means to the bid caller. Consequently, bidding can be preformed without letting the bidding prices know to the site operator of an electronic commerce site.

The bidding method of the present invention is the bidding method for receivingbids frombidders by disclosing call-for-bid information that has been received from a bid caller calling for bids, and receiving information about a winning bidder determined by the bid caller based on that bidding information, which comprises a bidding information receiving step of receiving bidding price range information sent by a bidder over a communication network, and a fee calculating step of calculating a fee based on the bidding price range information received in the bidding information receiving step. By doing so, bidding can be preformed without letting the bidding prices and/or the winning bidding price know to the site operator of an electronic commerce site.

Also, the bidding method of the present invention is the bidding method for receiving bids from bidders by disclosing call-for-bid information that has been received from a bid caller calling for bids, and receiving information about a winning bidder determined by the bid caller based on that bidding information, which comprises a bidding information receiving step of receiving bidding price information and bidding price range information sent by a bidder over a communication network, a bidding price information sending step of sending received bidding price information over the communication network to the bid caller, a bidding price information leakage prevention step of preventing the received bidding price information from becoming known to the operator of the bidding system, and a fee calculating step of calculating a fee based on the received bidding price range information. By doing so, bidding can be preformed without letting the bidding prices and/or the winning bidding price know to the site operator of an electronic commerce site.

Furthermore, the bidding method of the present invention is the bidding method that for receiving bids from bidders by disclosing call-for-bid information that has been received from a bid caller calling for bids, and receiving information about a winning bidder determined by the bid caller based on that bidding information, which comprises a shared key receiving step of receiving, over a communication network, a shared key different for each bidder that has been created by the bid caller and stored in an electronic envelope, a shared key sending step of sending, over the communication network, the received shared keys to the bidders, a bidding price information receiving step of receiving, over the communication network, bidding price information that has been encrypted with a shared key, and a bidding price information sending step of sending, over the communication network, the received encrypted bidding price information to the bid caller. By doing so, bidding can be preformed without letting the bidding prices know to the site operator of an electronic commerce site.

The storage medium of this invention is the storage medium storing a bidding program for receiving bids from bidders by disclosing call-for-bid information that has been received from a bid caller calling for bids, and receiving information about a winning bidder determined by the bid caller based on that bidding information, the bidding program performing on a computer, a bidding information receiving step of receiving bidding price range information sent by a bidder over a communication network, and a fee calculating step of calculating a fee based on the bidding price range information received in the bidding information receiving step. Consequently, bidding can be preformed without letting the bidding prices and/or the winning bidding price know to the site operator of an electronic commerce site.

The storage medium of this invention is the storage medium storing a bidding program for receiving bids from bidders by disclosing call-for-bid information that has been received from a bid caller calling for bids, and receiving information about a winning bidder determined by the bid caller based on that bidding information, the bidding program performing on a computer, a bidding information receiving step of receiving bidding price information and bidding price range information sent by a bidder over a communication network, a bidding price information sending step of sending received bidding price information over the communication network to the bid caller, a bidding price information leakage prevention step of preventing the received bidding price information from becoming known to the operator of the bidding system, and a fee calculating step of calculating a fee based on the received bidding price range information. Consequently, bidding can be preformed without letting the bidding prices and/or the winning bidding price know to the site operator of an electronic commerce site.

The storage medium of this invention is the storage medium of this invention is the storage medium storing a bidding program for receiving bids from bidders by disclosing call-for-bid information that has been received from a bid caller calling for bids, and receiving information about a winning bidder determined by the bid caller based on that bidding information, the bidding program performing on a computer, a shared key receiving step of receiving, over a communication network, a shared key different for each bidder that has been created by the bid caller and stored in an electronic envelope, a shared key sending step of sending, over the communication network, the received shared keys to the bidders, a bidding price information receiving step of receiving, over the communication network, bidding price information that has been encrypted with a shared key, and a bidding price information sending step of sending, over the communication network, the received encrypted bidding price information to the bid caller.

### BRIEF DESCRIPTION OF THE DRAWINGS

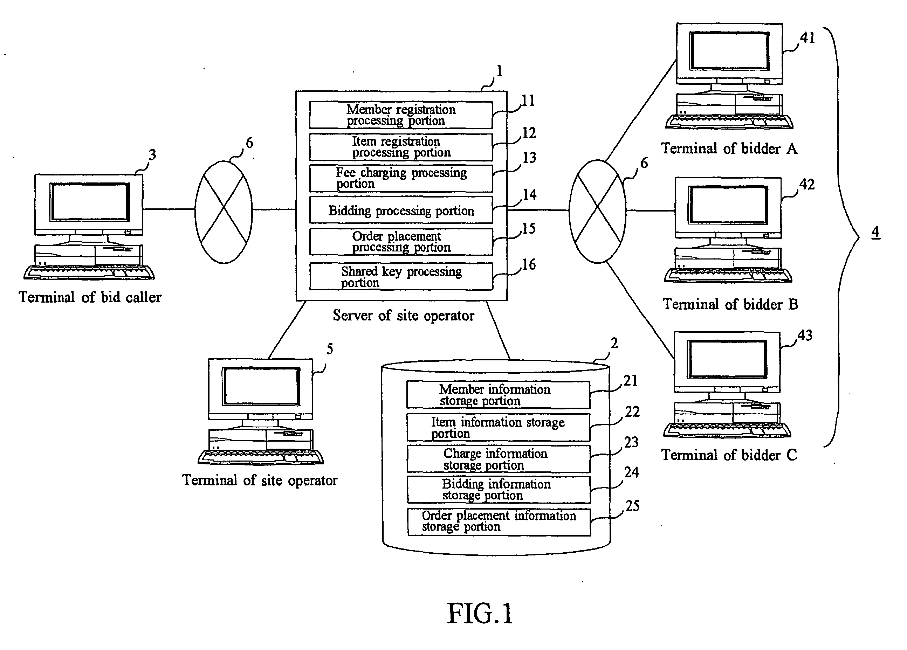

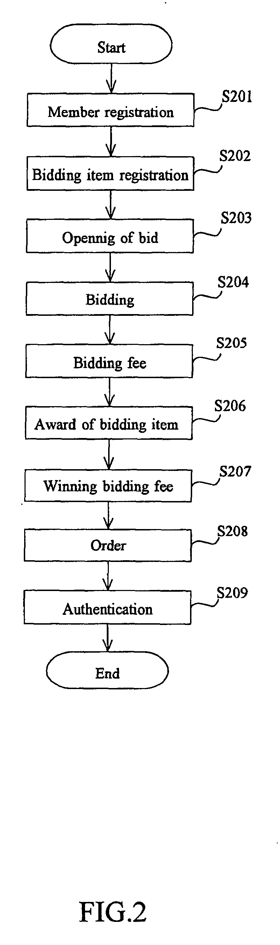

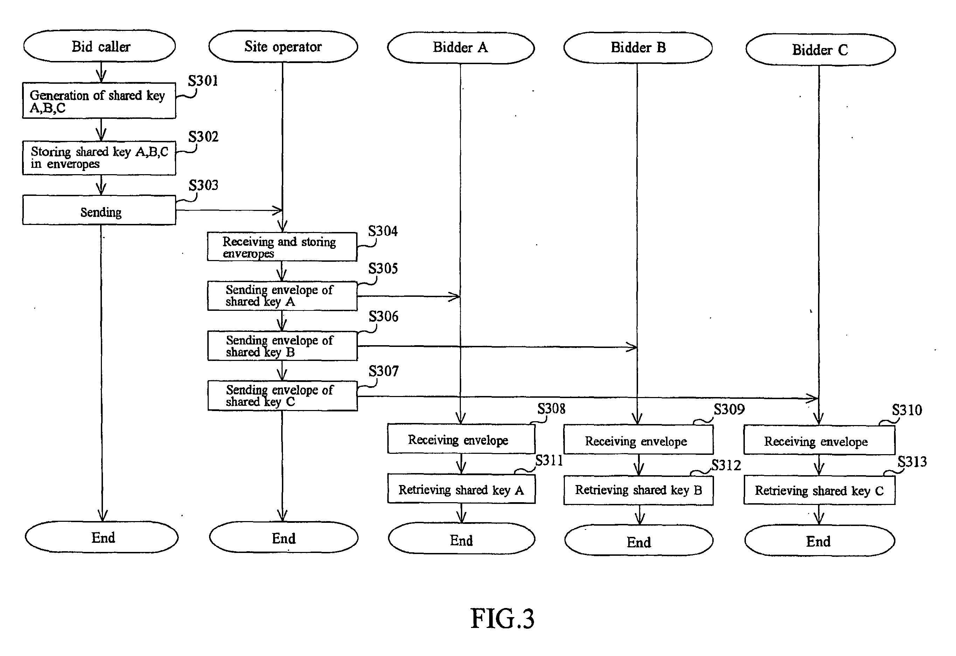

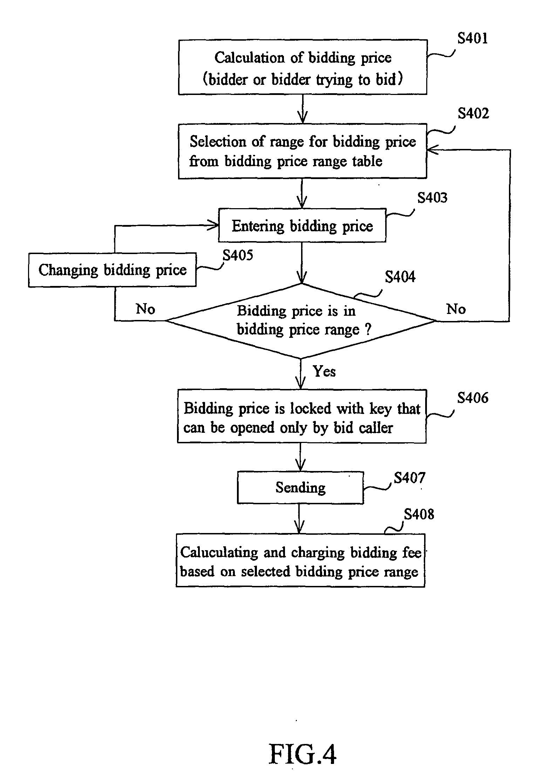

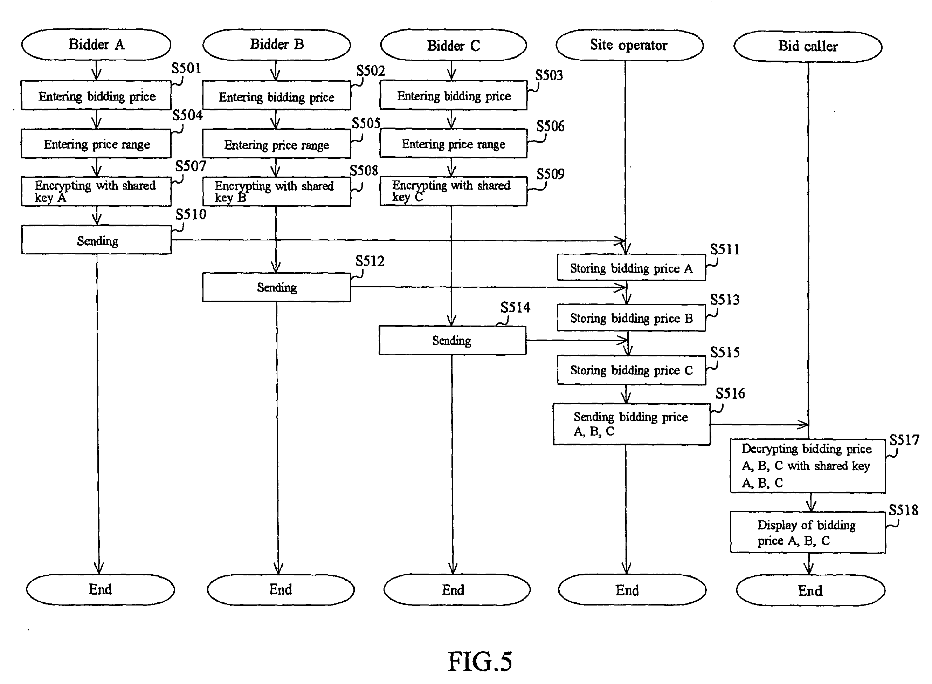

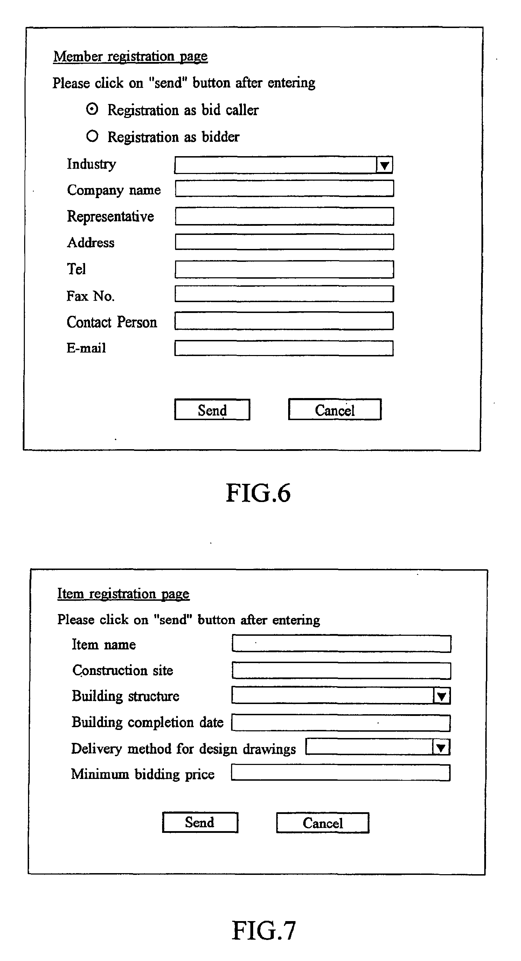

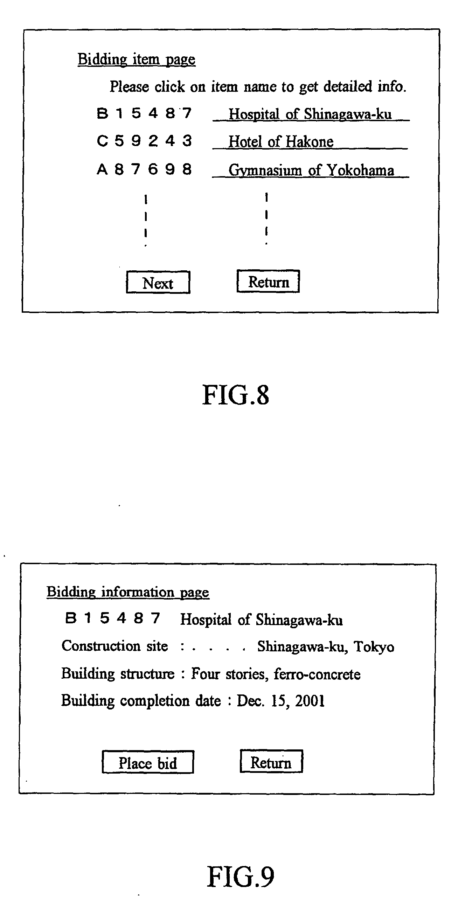

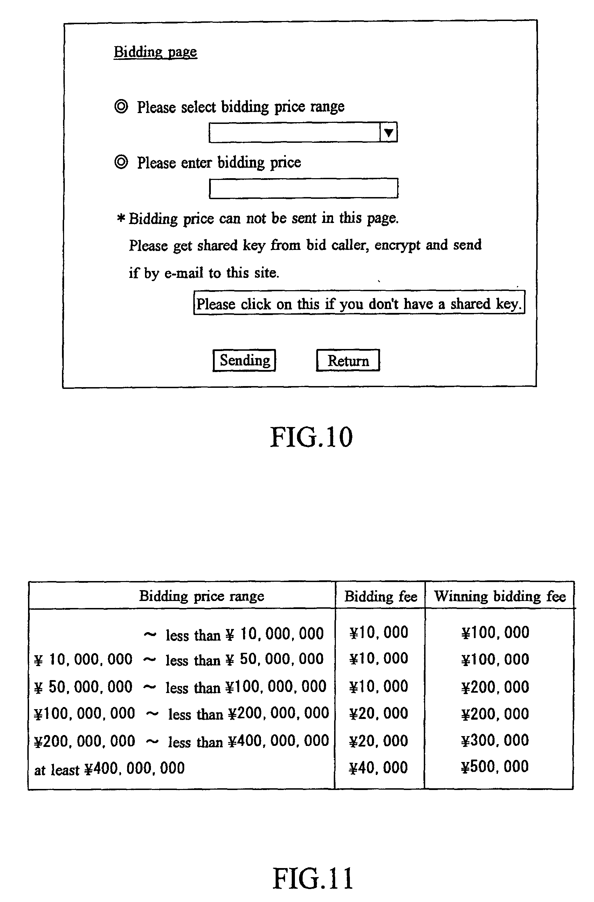

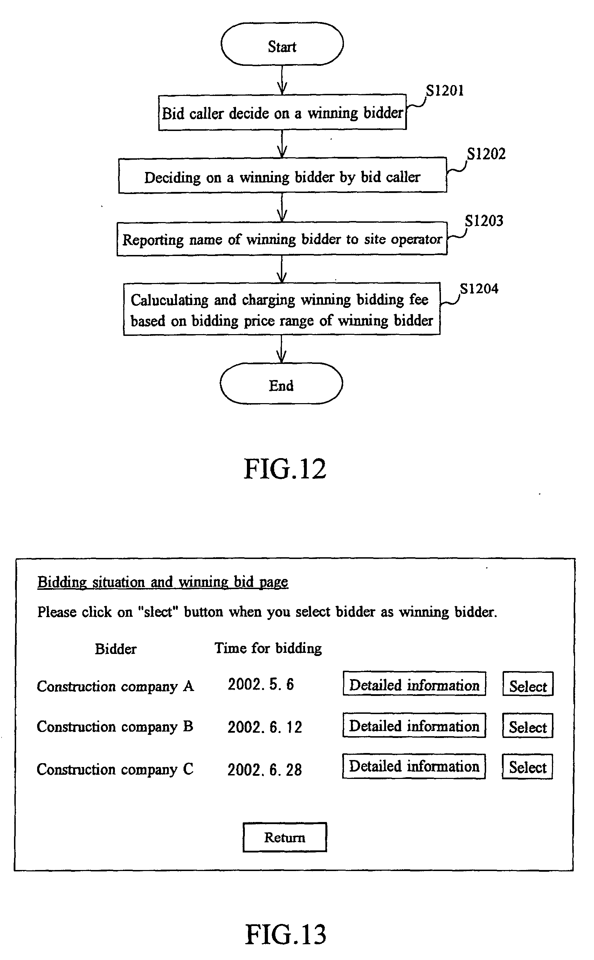

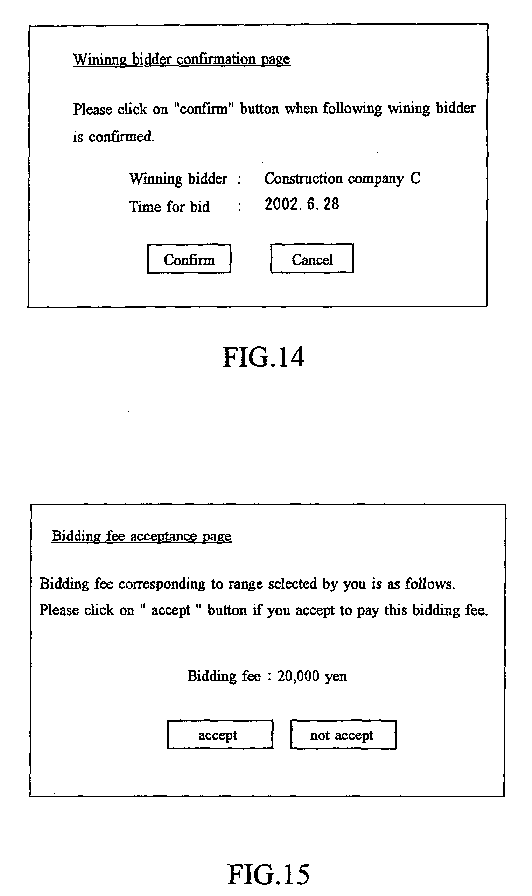

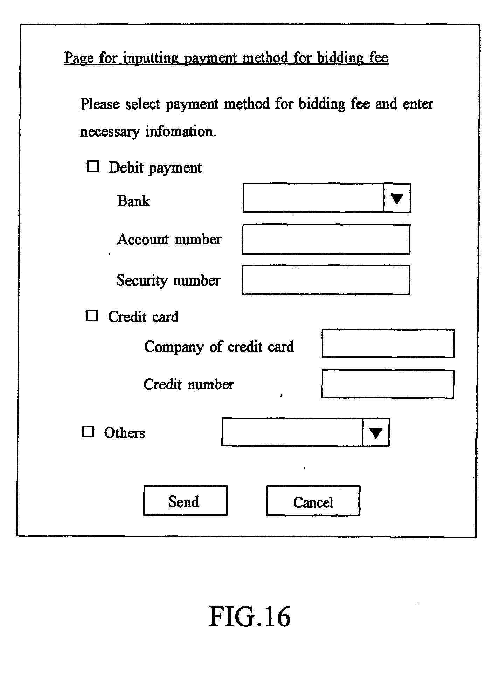

Fig. 1 is a system structure diagram showing a structure of the bidding system relating to the present invention. Fig. 2 is a flowchart showing overall process flow of a bidding system relating to the present invention. Fig. 3 is a flowchart showing a portion of flow of processing by a bidding system relating to the present invention. Fig. 4 is a flowchart showing a portion of flow of processing by a bidding system relating to the present invention. Fig. 5 is a flowchart showing a portion of flow of processing by abidding system relating to the present invention. Fig. 6 is a drawing showing an example of a screen display in regard to the present invention. Fig. 7 is a drawing showing an example of a screen display in regard to the present invention. Fig. 8 is a drawing showing an example of a screen display in regard to the present invention. Fig. 9 is a drawing showing an example of the screen display in regard to the present invention. Fig. 10 is a drawing showing an example of the screen display in regard to the present invention. Fig. 11 shows a bidding price range table in regard to the present invention. Fig. 12 is a flowchart showing a portion of flow of the processing by the bidding system relating to the present invention. Fig. 13 is a drawing showing an example of a screen display in regard to the present invention. Fig. 14 is a drawing showing an example of a screen display in regard to the present invention. Fig. 15 is a drawing showing an example of a screen display in regard to the present invention. Fig. 16 is a drawing showing an example of a screen display in regard to the present invention.

### BEST MODE FOR CARRYING OUT THE INVENTION

Fig. 1 illustrates the system configuration of a bidding system in accordance with the present invention. This embodiment of the present invention is explained with an example in which the invention is applied to bidding for a construction contract, but the present invention is not limited thereto, and the bidding system of the present invention can also be applied to bids for all other kinds of products or services. As shown in the drawing, the bidding system mainly includes a server 1, a database 2 and a terminal 5 of the site operator, and further, the terminal 3 of a bid caller and the terminals 4 of bidders are connected via a communication network 6.

The server 1 is made up of a server, a computer or the like, and having a configuration a of CPU, ROM, RAM, hard disk etc. (not shown in the drawings), it includes at least a member registration processing portion 11, an item registration processing portion 12, a fee charging processing portion 13, a bidding processing portion 14, an order placement processing portion 15, and a shared key processing portion 16. These processing portions are realized by operating the CPU based on various processing programs stored in a storage means, such as memory or hard disk. Furthermore, the database 2 includes a member information storage portion 21, an item information storage portion 22, a charge information storage portion 23, a bidding information storage portion 24 and an order placement information storage portion 25.

The member registration processing portion 11 has the function to carry out processing related to the registration of members. In principle, member registration is carried out by entering registration information with a terminal connected via the communication network 6. In the member registration, it is possible to register as bid caller or as bidder, and it is possible to select either one or both. Examples of registering members are construction companies, manufacturers, architect offices, budgeting offices and CM (construction management) companies. Of these, construction companies can participate in a bid as bidders, but once they have been successful in a bid, they can also participate in a bid as bid caller. The information registered with the member registration processing portion 11 is stored in the member information storage portion 21 of the database 2. If this bidding system is not used for construction contracts but other kinds of bids, then the registering members are not only construction companies etc., but can also include all kinds of members, such as manufacturers of products, trading companies purchasing products, service providers providing a service or auction houses performing auctions.

The item registration processing portion 12 has the function to carry out the processing for registering items put up for bids. Also the item registration is in principle carried out in that a bid caller, such as an architect office or a construction company, enters item information with the terminal 3 connected via the communication network 6. The item information registered with the item registration processing portion 12 is stored in the item information storage portion 22 of the database 2.

The fee charging processing portion 13 has the function to carry out the processing for the fees for performing a transaction on the system. The fees include a bidding fee paid when bidding and a winning bidding fee paid when bidding successfully. The bidding fee is paid by all bidders. On the other hand, the winning bidding fee is paid by one or both of the winning bidder and the bid caller. The bidding fee is determined based on the information in which range the bidding price presented at bidding is included in a previously provided bidding price range table (referred to as "bidding price range information" in the following). Also the winning bidding fee is based on the information in which range of the bidding price range table the winning bidding price is included, that is, based on the bidding price range information. As for the fees, it is possible to collect a registration fee paid at the time of registration as a member or a registration sustaining fee collected monthly or yearly as registration dues. The information serving as the basis for the charge processing with the fee charging processing portion 13 and the specific charge information to be charged to the members are stored in the charge information storage portion 23.

The bidding processing portion 14 has the function to carry out the processing for the bidding for a construction contract, in this embodiment. Regarding the item information about items subjected to bidding, the bidding processing portion 14 uses the information that has been registered with the item registration processing portion 12 and stored in the item information storage portion 22. Regarding the information about bids, the bidding processing portion 14 receives the information about bids that has been sent by bidders with their terminals 4, stores it in the bidding information storage portion 24, and uses this stored information. Then, if a plurality of bidders have placed a bid, one or a plurality of companies are recognized as winning bidders, based on predetermined criteria. As for the criteria for determining the winning bidder, the bid caller can successively obtain the information regarding bids by accessing the site, and decide on a winning bidder based on the information relating to the bids, or the bid caller can simply decide the company with the lowest bidding price as the winning bidder. In that case, the winning bidder is determined automatically by the server 1 of the site operator. Also the information about the winning bidder is stored in the bidding information storage portion 24.

The order placement processing portion 15 has the function to carry out the processing for formally placing the order with the winning bidder, based on the winning bidder information stored in the bidding information storage portion 24. The order placement information is stored in the order placement information storage portion 25 of the database 2.

The shared key processing portion 16 has the function to receive a shared key that is created by the bid caller and stored in an electronic envelope, and send it to the bidders.

The terminal 3 of the bid caller is a for example a personal computer (PC), which has a display means such as a display monitor and an input means such as a keyboard. It also has a communication function enabling the exchange of information with the server 1 over the communication network 6. On its hard disk, a browser is installed, that receives HTML (Hyper Text Markup Language) data and XML (extensible Markup Language) data sent from the server 1, converts it into data that is displayable on the display, and displays the data. Furthermore, electronic mail software is also installed.

The terminals 4 of the bidders are for example also PCs like the terminal 3 of the bid caller, and also have a display means such as a display monitor and an input means such as a keyboard. Moreover, they have a communication function enabling the exchange of information with the server 1 over the communication network 6. On their hard disk, they have the above-described browser installed. Furthermore, they are also equipped with electronic mail software. In the example shown in Fig. 1, the terminals 41, 42 and 43 of the three bidding companies A, B and C are shown.

The terminal 5 of the site operator, which is for example a PC, is connected to the server 1, and also has a display means such as a display monitor and an input means such as a keyboard. Basically, it plays the role of instructing and supervising the processes on the server 1.

The communication network 6 is a communication network, such as the internet or a public network.

Next, using the flowchart of Fig. 2, an outline of the overall process flow of the bidding system in accordance with the present invention is explained first. Then, all steps will be explained in detail.

First, the member registration for using the bidding system is performed (Step S201). Regarding member registration, it is possible to register as bid caller, as bidder or to register as both, as mentioned above. Next, the bid caller registers the bidding items (Step S202). The registration of the bidding items is performed on the terminal 3 of the bid caller via the communication network 6.

Then, the bid is opened (Step S203), and bids are submitted with the terminals 4 of the bidders (Step S204). In the course of the bidding, bidding fees are billed (Step S205).

After a predetermined period of time has passed, the bidding is closed, the winning bidder is selected fromall bidders, and the bidding item is awarded (Step S206). When a bid has been awarded, a winning bidding fee is collected from the winning bidder and/or the bid caller (Step S207). Based on the results of the winning bid, the order is placed (Step S208). Moreover, an authentication is carried out, if necessary (Step S209).

The following is a more detailed explanation of the steps in the flowchart of Fig. 2.

The step (S201) for member registration processing is carried out as follows. The member registration is carried out with the member registration processing portion 11 at the center. For example, when a construction client who intends to call for bids wants to register as a member, he first accesses the site of a bidding system in accordance with the present invention. Then, when calling up the display of the member registration page, the data for displaying the member registration page shown in Fig. 6 are sent over the communication network 6 to the terminal 3 of the bid caller. As shown in Fig. 6, the member registration page first provides the choice to register as a bid caller or as a bidder or as both. Further, the page prompts the bid caller to enter the necessary information for member registration, such as industry, company name, name of company representative, address, telephone number, fax number, name of contact person and e-mail address of contact person. It should be noted that it is also possible to include further information to be entered, such as the department name of the contact person. Once the bid caller has entered this information and clicked the "send" button, the entered information is sent via the communication network 6 to the server 1. On the server 1, the member registration processing portion 11 receives this information and stores it in the member information storage portion 21 of the database 2. Then, when the member registration is terminated, the member registration processing portion 11 sends out by e-mail, mail or facsimile a member number and a password necessary for accessing the bidding system. The process of the registration as a bidder is the same as that for registration as a bid caller, except for the fact that this is indicated at the beginning.

The following is an explanation of the item registration step (S202). Item registration means the registration of items put up for bidding, and in this embodiment, it means the registration of construction contract items. In principle, the bid caller performs the item registration with the terminal 3 over the communication network 6.

More specifically, first, using its terminal 3, the bid caller requests the sending of the item registration page from the server 1. In response to this request, the item registration processing portion 12 of the server 1 sends the item registration page shown in Fig. 7 over the communication network 6 to the terminal 3 of the bid caller, who is a construction client. This item registration page is displayed on the display of the terminal 3 of the construction client. The item registration page shown in Fig. 7 prompts the bid caller, that is, the construction client, to enter the information for specifying the item. This is, for example, item name, construction site, building structure, building completion date, delivery method for design drawings, and minimum bidding price. Here, in the field for the delivery method for design drawings, it is possible to choose between delivery by electronic mail, delivery by mail etc. It is also possible not to register the delivery method for design drawings at this stage. When this information has been entered, and the "send" button has been clicked, this information is sent to the server 1 over the communication network 6. The item information is received by the server 1, and stored by the item registration processing portion 12 in the item information storage portion 22. Moreover, the item registration processing portion 12 assigns an item number to each registered item and sends the bidding information together with the shared key and the password required to access the bidding information regarding item and item information by e-mail or the like over the communication network 6 to the terminal 3 of the bid caller. It should be noted that the disclosure range of the item information registered by the item registration processing portion 12 is set step-wise, and it is also possible to change the disclosure range in accordance with the qualification of the accessing person. This can be realized by managing the data for the item information for each field with the shared key.

The following is a detailed explanation of the specific process up to the bidding step (S204) and the bidding charge step (S205). Fig. 4 shows the specific process flow of theses steps.

The bidding is basically performed with the bidding processing portion 14 of the server 1. The bidding processing portion 14 is put into a state in which the bidding item page is accessible by the members of the bidding system via the communication network 6, as shown in Fig. 8. More specifically, the bidding item page is provided on the site of the bidding system. On the bidding item page shown in Fig. 8, items put up for bid are specified and listed by item number and item name. When the bidder clicks on an item name of a listed item using his own terminal 4, the bidding information page stating the detailed information about that item is displayed on the display of the terminal 4.

The bidder reads the bidding information page regarding a specific bidding item on the bidding item page, and calculates a bidding price (Step S401). An example of the bidding information page is shown in Fig. 9. In the example in Fig. 9, the item number, item name, construction site, building structure, building completion date etc. are displayed. For example, a construction company obtains this bidding information, and decides whether to participate in the bidding and how high the bidding price should be. When participation in the bidding and bidding price have been decided, the button marked "place bid" on the bidding information page in Fig. 9 is clicked. Thus, the page for placing a bid, in which the necessary bidding information can be entered, is sent from the server 1 to the terminal 4 of the bidder. Otherwise, the button marked "return" is clicked. It should be noted that in this example, bidders trying to place a bid can immediately enter a bidding price range on the bidding page, but it is also possible to report bidders trying to place a bid to the bid caller, and then let them calculate an estimate and bid only after having their qualification reviewed by the bid caller.

Then, on the bidding page, a range for a bidding price is selected from the bidding price range table (Step S402). Furthermore, a bidding price is entered on the same page (Step S403). Fig. 10 shows an example of the bidding page. The bidding page shown in Fig. 10 prompts construction companies that have decided to place a bid to select a range of bidding prices on the bidding page. The same page also displays a message that prompts the construction companies to enter a bidding price. Here, the field for entering a range of bidding prices displays, on its left edge, a button with a black triangle forming an arrow pointing downward. When this button is clicked, pre-determined bidding price ranges are displayed. The bidding price range is entered by selecting the range to which the bidding price belongs from these ranges. The ranges of bidding prices correspond with the ranges of bidding prices in the bidding price range table stored in the charge information storage portion 23 of the database 2. It should be noted that it is also possible to provide a page for entering the bidding price range, separately from the bidding page.

Fig. 11 shows an example of a bidding price range table in which bidding price ranges are correlated with bidding fees and winning bidding fees. In Fig. 11, the bidding price ranges are divided into six categories: less than ¥10,000,000; ¥10,000,000 to less than ¥50,000,000; ¥50,000,000 to less than ¥100,000,000; ¥100,000,000 to less than ¥200,000,000; ¥200,000,000 to less than ¥400,000,000; and at least ¥400,000,000. The bidding fee for the first three categories is ¥10,000, for the next two categories ¥20, 000 and for the last category ¥40,000. The winning bidding fee for the first two categories is ¥100,000, for the next two categories ¥200,000, for the following category ¥300,000 and for the last category ¥500,000.

Usually, the bidding fees and the winning bidding fees are determined as a predetermined percentage of the bidding price or the winning bidding price, but then the winning bidding price becomes known to the site operator of this system. As explained above, for the bid caller and the winning bidder, it is desirable not to disclose the information about the winning bidding price to third parties, because it is suggestive of the profit margin of the own business. And it is a fact that they do not want competitors or even the site operator of the electronic marketplace site know the bidding prices or winning bidding prices. This aspect is not limited to the bidding for construction contracts, but is also true for other biddings. But especially regarding bids for construction contracts, the sums involved are much higher than for regular products, so that the adverse effects brought about when bidding prices or winning bidding prices are disclosed to third parties are much larger than for other products or services. In the bidding system of the present invention, the fees are set in accordance with predetermined bidding price ranges, so that it is possible to determine a fee without letting the site operator know about the winning bidding price.

Then, it is determined whether the bidding price is in the bidding price range selected from the bidding price range table (Step S404). If the bidding price is not in the bidding price range selected from the bidding price range table, the bidding price range is selected again from the bidding price range table (Step S402) or the bidding price itself is changed (Step S405). The processing for these Steps S404 and S405 is performed on the terminal 4 of the bidder by a program for the bidding page. The site operator of the bidding system cannot see the bidding price itself, so that the site operator cannot check whether the selected bidding price range matches the bidding prices. Therefore, it is conceivable that the bidder selects a bidding price range that is incorrectly low, in order to lower the fee. However, with a configuration that checks whether the bidding price range selected from the bidding price range table matches the entered bidding price on the system during the input, it is possible to prevent such dishonesty.

If the bidding price is in the bidding price range selected from the bidding price range table, then the bidding price is locked with a key that can be opened only by the bid caller (Step S406). For the key, a shared key can be used, for example. Such a shared key is disclosed in JP 2000-183866A, for example. The bid caller creates the shared key beforehand and distributes it to the bidders.

Here, the process for distributing the shared key is explained in detail with reference to Fig. 3.

First, the bid caller generates a different shared key for each bidder (Step S301). In this example, the shared keys A, B and C are created for distribution to the bidders A, B and C. These shared keys A, B and C are stored in separate electronic envelopes (Step S302). Then, the electronic envelopes storing the shared keys A, B and C are sent to the server 1 of the site operator (Step S303).

The server 1 of the site operator receives these electronic envelopes with the shared key processing portion 16, and stores them (Step S304), and the electronic envelope storing the shared key A is sent by electronic mail over the communication network 6 to the terminal 41 of the bidder A (Step S305). The server 1 sends, with the shared key processing portion 16, the electronic envelope storing the shared key B by electronic mail over the communication network 6 to the terminal 42 of the bidder B (Step S306). And, the server 1 sends, with the shared key processing portion 16, the electronic envelope storing the shared key C by electronic mail over the communication network 6 to the terminal 43 of the bidder C (Step S307).

The bidder A receives the electronic envelope with the shared key A (Step S308), and retrieves the shared key A from the electronic envelope (Step S311). The bidder B receives the electronic envelope with the shared key B (Step S309), and retrieves the shared key B from the electronic envelope (Step S312). The bidder C receives the electronic envelope with the shared key C (Step S310), and retrieves the shared key C from the electronic envelope (Step S313). Thus, the shared keys are distributed by the bid caller to the bidders.

The bidders encrypt the bidding price information using the distributed shared keys, and send them by electronic mail or the like to the server 1 of the site operator. If a software program for this system has been previously installed on the terminals 4 of the bidders, the sending process can be devised such that the bidders can send the bidding price information simply by clicking the "send" button displayed on the screen. In that case, the software program reads the shared key stored separately on a hard disk in response to an instruction by the bidder, encrypts the bidding price information with that shared key, and sends it to the server 1 of the site operator. If the bidder does not have a shared key, the bidder can obtain a shared key from the bid caller by clicking a button saying "click here if you don't have the shared key" on the bidding page in Fig. 10.

The bidding price range information is sent to the server 1 through the communication network 6 (Step S407). The sent bidding price range information is stored by the bidding processing portion 14 in the bidding information storage portion 24.

On the server 1, the fee charging processing portion 13 refers to the bidding price range table, based on the bidding price range information stored in the bidding information storage portion 24, calculates the fee, and performs charge processing (Step S408).

The bidding processing portion 14 of the server 1 separately receives the bidding price information sent by the bidders, and stores it in the bidding information storage portion 24. The bidding price information is encrypted with the shared keys distributed by the bid caller.

The processing for the bidding price information is explained in detail with reference to Fig. 5.

Bidder A enters the bidding price information on his own terminal 41 (Step S501). Then he enters the bidding price range information (Step S504). Of the entered information, only the bidding price information is encrypted with the shared key A that has previously been distributed (Step S507). The bidding price range information and the encrypted bidding price information are sent via the communication network 6 to the server 1 of the site operator (Step S510).

Similarly, also bidder B enters bidding price information (Step S502) and bidding price range information (Step S505), and encrypts only the bidding price information with the shared key B (Step S508). Then, the bidding price range information and the encrypted bidding price information are sent via the communication network 6 to the server 1 of the site operator (Step S512).

Furthermore, also bidder C enters bidding price information (Step S503) and bidding price range information (Step S506), and encrypts only the bidding price information with the shared key C (Step S509). Then, the bidding price range information and the encrypted bidding price information are sent via the communication network 6 to the server 1 of the site operator (Step S514).

The bidding price range information is stored by the bidding processing portion 14 in the bidding information storage portion 24.

The bidding price information sent from the terminal 41 of the bidder A (referred to as "bidding price information A" in the following) is received by the bidding processing portion 14 of the server 1 and stored in the bidding information storage portion 24 (Step S511). The bidding price information sent from the terminal 42 of the bidder B (referred to as "bidding price information B" in the following) is received by the bidding processing portion 14 and stored in the bidding information storage portion 24 (Step S513). The bidding price information sent from the terminal 43 of the bidder C (referred to as "bidding price information C" in the following) is received by the bidding processing portion 14 and stored in the bidding information storage portion 24 (Step S515).

Then, the bidding price information A, B and C is sent from the server 1 of the site operator via the communication network 6 to the terminals 3 of the bid caller (Step S516). At this time, these pieces of bidding price information are encrypted by the shared keys A, B and C, respectively, so that the site operator cannot read them.

The terminal 3 of the bid caller that has received the bidding price information A, B and C decrypts the bidding price information with the corresponding shared keys A, B and C (Step S517). Then, the decrypted bidding price information is displayed on the displays of the respective terminals 41, 42 and 43 (Step S518). At that time, it is also possible to print out the bidding price information on paper or the like. It is sufficient if eventually, the bid caller knows the bidding prices.

The following is an explanation of a bid awarding step (S206) and a winning bidding charge step (S207). Fig. 12 is a flowchart explaining these steps in detail.

As explained above, the bidding price information stored in the bidding information storage portion 24 is encrypted by the shared key that has been distributed by the bid caller, so that the site operator cannot see its contents. The bid caller, using its own terminal 3, sends a request to browse bidding price information to the server 1 of the site operator, and the bidding price information is sent over the communication network 6 to the terminal 3 of the bid caller. The bid caller can decrypt the bidding price information using the shared key and review the bidding prices. Alternatively, it is also possible that the bid caller can browse a web page displaying the bidding situation apart from the bidding prices, as shown in Fig. 13. This web page has the function to select the winning bidder. This bidding page displays the company name and the bidding time for each bidder, as specified by the bidders. It is also provided with a "detailed information" button for each bidder. When clicking the "detailed information" button, the detailed information that the bidder has entered during registration is displayed.

The bid caller reviews the bidding prices with the terminal 3 over the communication network 6, and decides on a winning bidder (Step S1201). After the decision, the bid caller calls up the web page shown in Fig. 13 and clicks on the "select" button. When the "select" button has been clicked, a page is displayed that asks for confirmation about the bidder whose "select" button has been clicked. An example of the confirmation page is shown in Fig. 14. If, as a result of confirming the winning bidder, the displayed company is in fact the winning bidder, then the "confirm" button is clicked. If the displayed company is not the winning bidder, then the "cancel" button is clicked. It should be noted that because the bidding is limited to a predetermined period, the decision on the winning bidder is performed after the bidding period has closed.

When the "confirm" button has been clicked and the winning bid has been decided, the bidding processing portion 14 of the server 1 reports that fact over the communication network 6 to the terminal 4 of the winning bidder (Step S1202). Furthermore, the bidding processing portion 14 reports the name of the winning bidder to the terminal 5 of the site operator (Step S1203). At this time, only the name of the winning bidder is reported by the terminal 5 of the site operator, and the winning bidding price is not reported. This means that the site operator has no way of knowing the winning bidding price.

The fee charging processing portion 13 of the server 1 calculates the winning bidding fee by looking up the bidding information stored in the charge information storage portion 23 in the bidding price range table, and carries out charge processing (Step S409). The winning bidding fee is charged to the bid caller, but it can also be charged to the bidder. It is further possible to charge it to both.

The following is an explanation of the order placement process (S208). After the winning bidder has been decided, the order placement processing portion 15 of the server 1 places the order via the communication network 6 to the terminal 43 of the construction company C, which is the winning bidder. The order placement processing portion 15 stores the information relating to the order placement in the order placement information storage portion 25 of the database 2 every time an order placement is processed.

The following is an explanation of the processing step for authentication (S209). The authentication is carried out if there is a discrepancy of the bidding price between the bid caller and the bidder.

As mentioned above, the bidding price information is stored by the bidding processing portion 14 of the server 1 of the site operator in encrypted form in a certain region of the bidding information storage portion 24 of the database 2. When performing authentication, the bidding price information stored in that bidding information storage portion 24 is read out, decrypted using the shared key under the presence of the bid caller and the bidder, and the bidding price information is confirmed. More specifically, using the terminal 5 of the site operator, the bidding processing portion 14 is instructed to read out the corresponding bidding price information. Based on that instruction, the bidding processing portion 14 reads out the bidding price information stored in the bidding information storage portion 24. On the other hand, the bid caller and the bidder enter the shared key using the terminal 5. The bidding processing portion 14 decrypts the bidding price information read out with the entered shared key, and displays it on the display of the terminal 5. In this situation, it is possible to make encryption possible with either one of the public keys of the bid caller and the bidder, or to necessitate both the shared key of the bid caller and the shared key of the bidder.

Different to the above-described example, it is also possible to confirm, as a condition to participate in the bidding, any of (1) agreement with payment of the bidding fee, (2) input of the payment method for the bidding fee, and (3) ability to pay the bidding fee. By doing so, it can be made sure that the bidding fee can be collected. Furthermore, it eliminates bidders who try to take part in the bidding "just for fun".

If (1) is taken as a condition, the following processing is performed. When the bidder enters the bidding price range information into the terminal 4, the bidding price range information is sent to the server 1. The server 1 reads the bidding fee from the table shown in Fig. 11, based on this bidding price range information, and sends a bidding fee acceptance page including the bidding fee to the terminal 4 of the bidder. A bidding fee acceptance page is shown in Fig. 15. As shown in Fig. 15, this page displays the bidding fee, and lets the bidder click the "accept" button if the bidder agrees to pay the displayed bidding fee. On the other hand, it lets the bidder click the "cancel" button if the bidder does not agree to pay the bidding fee. Only if the bidder has clicked the "accept" button can the bidding price be entered, so that bidders not agreeing to the payment of the bidding fee are excluded from participating in the bidding. In this situation, it is also possible to make the entering of the bidding price possible even when the bidder has not agreed to pay the bidding fee, but to exclude that bidder from participating in the bidding by later making the entry of that bidding price invalid.

If (2) is taken as a condition, the following processing is performed. When the bidder enters the bidding price range information into the terminal 4, a page for inputting the payment method for the fee is sent from the server 1 to the terminal 4. Fig. 16 shows an example of a page for inputting the payment method for the bidding fee. In the example shown in Fig. 16, it is possible to select between debit payment, credit card and other payment methods. Only when the bidder has entered a method for paying the bidding fee, it is possible to enter the bidding price information. Also in this case, it is possible to make the entering of the bidding price possible, but to exclude that bidder from participating in the bidding by later making the entry of that bidding price invalid.

If (3) is taken as a condition, the following processing is performed. When the bidder enters the bidding price range information into the terminal 4, a page for inputting the payment method as shown in Fig. 16 is sent from the server 1 to the terminal 4. When the bidder enters a payment method on this page, the entered information is sent to the server 1 via the communication network 6. The server 1 sends the entered information to a payment settling institution, and asks for confirmation of the ability to settle the payment. Here, in the case of debit payment, the payment settling institution is a specified bank, which confirms the ability to settle the payment by confirming the balance of the specified bank account. In the case of credit card payment, the payment settling institution is a specified credit card company, which looks up the credit balance. Then, the result of the confirmation of the ability to settle the payment is sent by the payment settling institution to the server 1. The server 1 then allows bidders that have been deemed to be able to settle the payment to enter the bidding price, whereas bidders that have not been deemed to be able to settle the payment are not allowed to enter the bidding price. Also in that case, it is possible to make the entering of the bidding price possible, but to exclude that bidder from participating in the bidding by later making the entry of that bidding price invalid.

It should be noted that in the above-describe example, the shared key is sent from the bid caller through the server 1 of the site operator to the bidders, but it is also possible to send it directly from the bid caller to the bidders.

Furthermore, in order to execute the above-described bidding system, it is possible to store a program for realizing the various functions providedby the server 1 on a storage medium. Here, examples for such a storage medium include storage media such as flexible disk, CD-ROM, optomagnetic disk, semiconductor memory, hard disk, as well as storage devices.

With the present invention, bidding can be performed without letting the bidding prices and the winning bidding price know to the site operator of an electronic commerce site.

### INDUSTRIAL APPLICABILITY

As described above, the bidding system in accordance with the present invention is useful for the bidding for construction contracts as well as for all other kinds of products and services.

## Claims

1. A bidding system that receives bids from bidders by disclosing call-for-bid information that has been received from a bid caller calling for bids, and that receives information about a winning bidder determined by the bid caller based on that bidding information, comprising:
bidding information receiving means for receiving bidding price range information sent by a bidder over a communication network; and
fee calculating means for calculating a fee based on the bidding price range information received by the bidding information receiving means.

2. A bidding system that receives bids from bidders by disclosing call-for-bid information that has been received from a bid caller calling for bids, and that receives information about a winning bidder determined by the bid caller based on that bidding information, comprising:
bidding information receiving means for receiving bidding price information and bidding price range information sent by a bidder over a communication network;
bidding price information sending means for sending bidding price information received by the bidding information receiving means over the communication network to the bid caller;
bidding price information leakage prevention means for preventing the bidding price information received by the bidding information receiving means from letting the operator of the bidding system know; and
fee calculating means for calculating a fee based on the bidding price range information received by the bidding information receiving means.

3. The bidding system according to claim 1 or claim 2, wherein the bidding price range information is information made up of a predetermined price range including the bidding price.

4. The bidding system according to claim 1 or claim 2, wherein the fee calculation means calculates the fee using a table correlating the bidding price range information with fee information.

5. The bidding system according to claim 1 or claim 2, wherein the fee calculation means calculates the winning bidding fee based on the winning bidder information and the bidding price range information.

6. The bidding system according to claim 1 or claim 2, wherein the bidding system further comprises, on a bidder's terminal, means for comparing the bidding price information entered by the bidder with bidding range information, and prompting the bidder reenter a bidding price in case of an inconsistency.

7. The bidding system according to claim 1 or claim 2, wherein the bidding system further comprises means for restricting participation in the bidding if a bidder does not agree to payment of the bidding fee.

8. The bidding system according to claim 1 or claim 2, wherein the bidding system further comprises means for restricting participation in the bidding if a bidder does not enter a method for payment of the bidding fee.

9. The bidding system according to claim 1 or claim 2, wherein the bidding system further comprises means for confirming a bidder' s ability to settle payment, based on a method of payment of the bidding fee entered by the bidder, and means for restricting participation in the bidding if the bidder's ability to settle payment cannot be confirmed with that confirmation means.

10. A bidding system that receives bids from bidders by disclosing call-for-bid information that has been received from a bid caller calling for bids, and that receives information about a winning bidder determined by the bid caller based on that bidding information, comprising:
shared key receiving means for receiving, over a communication network, a shared key different for each bidder that has been created by the bid caller and stored in an electronic envelope;
shared key sending means for sending, over the communication network, the received shared keys to the bidders;
bidding price information receiving means for receiving, over the communication network, bidding price information that has been encrypted with a shared key sent by the shared key sending means; and
bidding price information sending means for sending, over the communication network, bidding price information that has been received by the bidding price information receiving means to the bid caller.

11. A bidding method for receiving bids from bidders by disclosing call-for-bid information that has been received from a bid caller calling for bids, and receiving information about a winning bidder determinedby the bid caller based on that bidding information, comprising:
a bidding information receiving step of receiving bidding price range information sent by a bidder over a communication network; and
a fee calculating step of calculating a fee based on the bidding price range information received in the bidding information receiving step.

12. A bidding method for receiving bids from bidders by disclosing call-for-bid information that has been received from a bid caller calling for bids, and receiving information about a winning bidder determined by the bid caller based on that bidding information, comprising:
a bidding information receiving step of receiving bidding price information and bidding price range information sent by a bidder over a communication network;
a bidding price information sending step of sending received bidding price information over the communication network to the bid caller;
a bidding price information leakage prevention step of preventing the received bidding price information from becoming known to the operator of the bidding system; and
a fee calculating step of calculating a fee based on the received bidding price range information.

13. A bidding method that for receiving bids from bidders by disclosing call-for-bid information that has been received from a bid caller calling for bids, and receiving information about a winning bidder determined by the bid caller based on that bidding information, comprising:
a shared key receiving step of receiving, over a communication network, a shared key different for each bidder that has been created by the bid caller and stored in an electronic envelope;
a shared key sending step of sending, over the communication network, the received shared keys to the bidders;
a bidding price information receiving step of receiving, over the communication network, bidding price information that has been encrypted with a shared key; and
a bidding price information sending step of sending, over the communication network, the received encrypted bidding price information to the bid caller.

14. A storage medium storing a bidding program for receiving bids from bidders by disclosing call-for-bid information that has been received from a bid caller calling for bids, and receiving information about a winning bidder determined by the bid caller based on that bidding information, the bidding programper forming on a computer:
a bidding information receiving step of receiving bidding price range information sent by a bidder over a communication network; and
a fee calculating step of calculating a fee based on the bidding price range information received in the bidding information receiving step.

15. A storage medium storing a bidding program for receiving bids from bidders by disclosing call-for-bid information that has been received from a bid caller calling forbids, and receiving information about a winning bidder determined by the bid caller based on that bidding information, the bidding program performing on a computer:
a bidding information receiving step of receiving bidding price information and bidding price range information sent by a bidder over a communication network;
a bidding price information sending step of sending received bidding price information over the communication network to the bid caller;
a bidding price information leakage prevention step of preventing the received bidding price information from becoming known to the operator of the bidding system; and
a fee calculating step of calculating a fee based on the received bidding price range information.

16. A storage medium storing a bidding program for receiving bids from bidders by disclosing call-for-bid information that has been received from a bid caller calling for bids, and receiving information about a winning bidder determined by the bid caller based on that bidding information, the bidding program performing on a computer:
a shared key receiving step of receiving, over a communication network, a shared key different for each bidder that has been created by the bid caller and stored in an electronic envelope;
a shared key sending step of sending, over the communication network, the received shared keys to the bidders;
a bidding price information receiving step of receiving, over the communication network, bidding price information that has been encrypted with a shared key; and
a bidding price information sending step of sending, over the communication network, the received encrypted bidding price information to the bid caller.
